# EUROPEAN PATENT APPLICATION

(11) **EP 2 305 415 A1**
(43) Date of publication of application: **06.04.2011**
(21) Application number: 09802810.3
(22) Date of filing: 29.06.2009
(51) Int. Cl.: B23K 35/30, C22C 19/05, F01D 25/00, F02C 7/00

(54) **WELDING MATERIAL FOR NI-BASED ALLOY**

(30) Priority: 30.07.2008 JP 2008195580
(71) Applicant: Mitsubishi Heavy Industries, Ltd., Tokyo 108-8215 (JP)
(72) Inventor: KAWASAKI Kenji, Takasago-shi Hyogo 676-8686 (JP); YAMAMOTO Ryuichi, Takasago-shi Hyogo 676-8686 (JP); KADOYA Yoshikuni, Takasago-shi Hyogo 676-8686 (JP); NISHIMOTO Shin, Tokyo 108-8215 (JP); KAWAGUCHI Seiichi, Kakogawa-shi Hyogo 675-0031 (JP)
(74) Representative: Hart-Davis, Jason
(86) International application number: PCT/JP2009/061826
(87) International publication number: WO 2010/013565

(57) **Abstract**

Disclosed is a welding material for a Ni-based alloy, comprising components expressed as follows: C ≤ 0.05 mass%; 8 mass% ≤ Cr ≤ 25 mass%; Fe ≤ 4.0 mass%; W ≤ 15 mass%; mass% ≤ Mo + 1/2(W + Re) ≤ 20 masses; Co ≤ 20 mass%; 0.01 mass% ≤ Al < 2.0 mass%; 0.01 mass% ≤ Ti < 2.0 mass%; Al + 1/2Ti ≤ 3.0 mass%; Nb + 1/2Ta ≤ 1.5 mass%; B ≤ 0.007 mass%; Zy ≤ 0.04 mass%; 0.01 mass% ≤ Si ≤ 0.5 mass%; Mn ≤ 1.0 mass%; P ≤ 0.01.0 mass%; S ≤ 0.002 mass%; O ≤ 0.005 mass%; and Ni and unavoidable impurities which constitute the balance.

## Description

### TECHNICAL FIELD

The present invention relates to a welding material for a Ni-based alloy, the welding material being used for welding of a Ni-based alloy.

### BACKGROUND ART

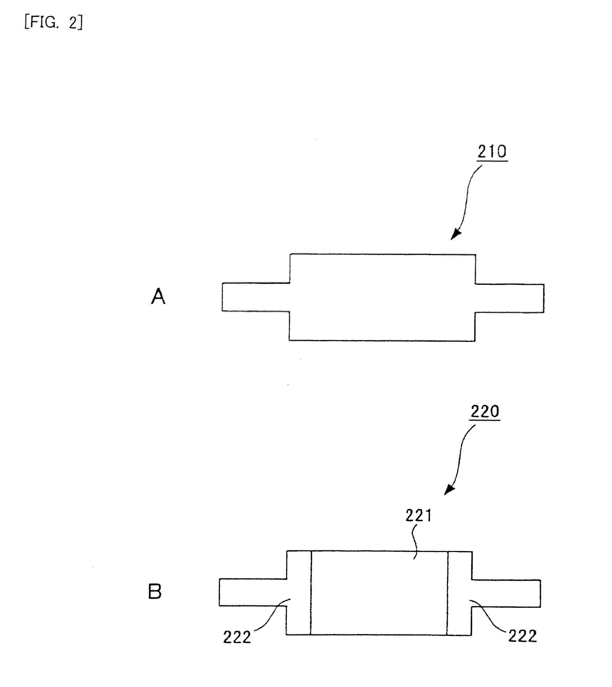

In steam turbines and gas turbines, for example, rotors supposed to experience high temperature have been formed by mainly using ferritic 12Cr steel which is excellent in manufacturability and heart-resistant strength and has a low coefficient of thermal expansion. For example, as shorn in FIG. 2, a rotor 210 is produced as an integrated body formed of 12Cr steel by melting and forging (see FIG. 2A). Alternatively, a rotor 220 is produced in such a way that a main body part 221, which is to experience high temperature, is formed of 12Cr steel by melting and forging; shaft end parts 222 are formed of a low alloy steel by melting and forging; and then the main body part 221 and the shaft end parts 222 are welded together (see FIG. 2B).

In this regard, in order two improve the thermal efficiency in, for example, a steam turbine, further elevation of the temperature of steam has been studied in recent years (650°C or higher). When such high-temperature steam at or abode 650°C is applied, it is difficult for a rotor formed of 12Cr steel to achieve a sufficient heat-resistant strength. To address this, for example. Patent Document 1 and the like propose the use of an austenitic Ni-based alloy having a low coefficient of thermal expansion for such a rotor.

### CITATION LIST

### PATENT LITERATURES

Patent Literature 1: Japanese Patent Application Publication No. 2007-332412
Patent Literature 2: Japanese Patent Application Publication No. Hei 3-077791
Patent Literature 3: Published Japanese Translation of PCT International Application No. 2005-070612

### SUMMARY OF INTENTION

### Technical PROBLEM

The above-described Ni-based alloy proposed in Patent Document 1 and the like contains various elemental components. Hence, when a large rotors is formed of the Ni-based alloy as an integrated body by melting and forging as in the case of the 12Cr steel or the like, the various elemental components may be unevenly present, and may segregate.

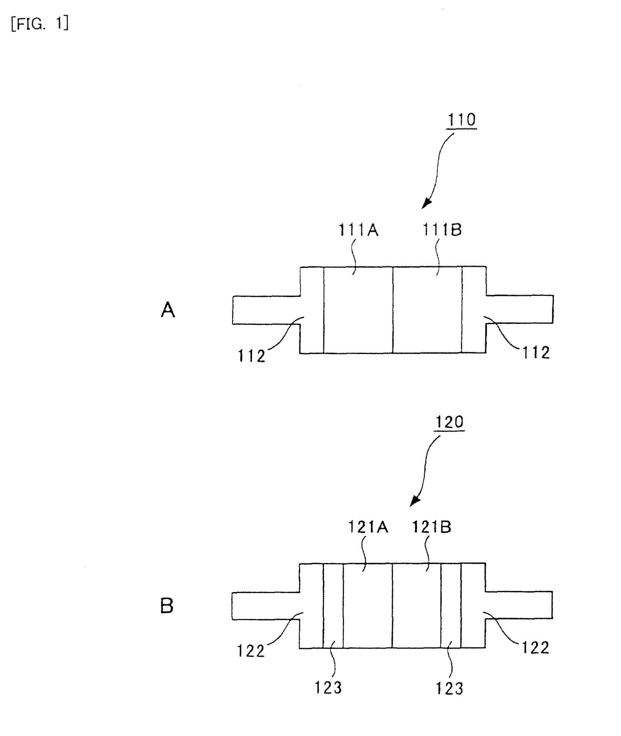

In this respect, the following production techniques of rotors shown in FIG. 1 are considered. Specifically, a rotor 110 is produced (see FIG. 1A) in such a way that multiply divided main body parts 111A and 111B are each formed of an austenitic Ni-based alloy having a low coefficient of thermal expansion by melting and forging; shaft end parts 112 for about 600°C are formed of 12Cr steel or a low alloy steel, which are relatively inexpensive, by melting and forging; and then the main body parts 111A and 111B and the shaft end parts 112 are welded together. Instead, a rotor 120 is produced (see FIG. 1B) in such a way that multiply divided main body parts 121A and 121B are each formed of the Ni-based alloy by melting and forging; shaft end parts 122 are formed of a low alloy steel by melting and forging; intermediate parts 123 are formed of 12Cr steel by melting and forging, and then the main body parts 121P. and 121B and the shaft end parts 122 are welded together, with the intermediate parts 123 interposed therebetween.

However, when such an austenitic Ni-based alloy or the like having a low coefficient of thermal expansion is welded by use of a typical welding material for a Ni-based alloy (for example, AWS standard A5.14 "ERNiCrMo-3" or the like), the Ni-based alloy has such a wide brittleness temperature range (BTR) (about 200°C in a case of "ERNiCrMo-3") that hot cracks during welding may occur more frequently.

Under such circumstances, an object of the present invention is to provide a welding material for a Ni-based alloy which can be prevented from causing hot cracks during welding, while being excellent in weldability for austenitic Ni-based alloys and the like having a low coefficient of thermal expansion.

### SOLUTION TO PROBLEM

A welding material for a Ni-based alloy, according to a first invention made to address the problems mentioned above is characterized by comprising components expressed as follows: C ≤ 0.05 mass%; 8 mass% ≤ Cr ≤ 25 mass%; Fe ≤ 4.0 mass%; W ≤ 15 mass%; 5 mass% ≤ Mo + 1/2 (W + Re) ≤ 20 mass%; Co ≤ 20 mass%; 0.01 mass% ≤ < 2.0 mass%; 0.01 mass% ≤ Ti < 2.0 mass%; Al + 1/2Ti ≤ 3.0 mass%; Nb + 1/2Ta ≤ 1.5 mass%; B ≤ 0.007 mass%; Zr ≤ 0.04 mass%; 0.01 mass% ≤ Si ≤ 0.5 mass%; Mn ≤ 1.0 mass%; P ≤ 0.010 mass%; S ≤ 0.02 mass%; O ≤ 0.005 mass%; and Ni and unavoidable impurities which constitute the balance.

A welding material for a Ni-based alloy, according to a second invention is characterized by comprising components expressed as follows: C ≤ 0.05 mass%; 8 mass% ≤ Cr ≤ 25 mass%; Fe ≤ 4.0 mass%; W ≤ 15 mass%; 5 mass% ≤ Mo + 1/2 (W + + Re) ≤ 20 mass%; Co ≤ 20 mass%; 0.01 mass% ≤ Al < 2.0 mass%; 0.01 mass% ≤ Ti < 2.0 mass%; Al + 1/2Ti ≤ 3.0 mass%; 1.5 mass% < Nb ≤ 6.5 mass%; Nb + 1/2Ta ≤ 6.5 mass%; B ≤ 0.007 mass%; Zr ≤ 0.04 mass%; 0.01 mass% ≤ Si ≤ 0.5 mass%; Mn ≤ 1.0 mass%; P ≤ 0.010 mass%; S ≤ 0.002 mass%; O ≤ 0.005 mass%; and Ni and unavoidable impurities which constitute the balance.

The welding material for a Ni-based alloy according to a third invention is **characterized in that** the welding material for a Ni-based alloy according to the second invention has a composition further satisfying N ≤ 0.03 mass% and C + N ≤ 0.05 mass%.

The welding material for a Ni-based alloy according to a fourth invention is **characterized in that** the welding material for a Ni-based alloy according to the second invention has a composition further satisfying a rare dearth elements ≤ 0.01 mass%. ADVANTAGEOUS EFFECTS OAF Invention

The welding material for a Ni-based alloy according to the present invention has the above-described composition, and hence can be prevented from causing hot cracks during welding while being excellent in weldability for austenitic Ni-based alloys and the like having a low coefficient of thermal expansion.

### BRIEF DESCRIPTION OF DRAWINGS

[Fig. 1] Fig. 1 shows a diagram for describing materials of rotors in cases where a Ni-based alloy is used for main body parts for rotors or turbines.
[Fig. 2] Fig. 2 shows a diagram for describing materials of rotors in cases where 12Cr steel is used for main body parts of rotors of turbines.

### DESCRIPTION OF EMBODIMENTS

Hereinafter, embodiments of a welding material for a Ni-based alloy according to the present invention are described. Note that in each embodiment, description of contents which are the same as these in a previously described embodiment is omitted.

### [FIRST EMBODIMENT]

A welding material for a Ni-based alloy according to a first embodiment has a composition in which C ≤ 0.05 mass%, 8 mass% ≤ Cr ≤ 25 mass%, Fe ≤ 4.0 mass%, W ≤ 15 mass%, 5 mass% ≤ Mo + 1/2 (M + Re) ≤ 20 mass%, Co ≤ 20 mass%, 0.01 mass% ≤ Al < 2.0 mass%, 0.01 mass% ≤ Ti < 2.0 mass%, Al + 1/2Ti ≤ 3.0 mass%, Nb + 1/2Ta ≤ 1.5 mass%, B ≤ 0.007 masts%, Zr ≤ 0.04 masts%, 0.01 mass% ≤ Si ≤ 0.5 mass%, Mn ≤1.0 mass%, P ≤ 0.010 mass%, S ≤ 0.002 mass%, 0 ≤ 0.005 masts%, and the balance are Ni and unavoidable impurities.

C (carbon) has an effect of reinforcing a solid solution and thereby increasing the tensile strength. However, an excessive amount thereof leads to deterioration is hot workability, along with generation of carbides. Hence, the content thereof is set to 0.05 mass% for less.

Cr (chromium) has an effect of improving corrosion resistance. However, an excessive amount thereof brings about increase in susceptibility to hot cracks during welding and increase in coefficient of thermal expansion. Hence, the content thereof is set to 8 to 25 mass%.

Fe (iron) has an effect of suppressing occurrence of scales, which may occur in a case of a higher content. However, an excessive amount thereof brings about deterioration in high temperature strength and increase in coefficient of thermal expansion. Hence, the content thereof is set to 4 mass% or less.

Mo (molybdenum), W (tungsten), and Re (rhenium) have an effect of reinforcing a solid solution and thereby increasing high temperature strength by solid-dissolving in an austenite phase, and an effect of lowering coefficient of thermal expansion. However, when the total amount of these element is excessive, deterioration in hot workability and deterioration in ductility are brought about. In addition, when W exceeds 15 mass%, α-W precipitates to bring about deterioration of hot workability. Hence, Mo + 1/2(W + Re) is set to 5 to 20 mass%, and W is set to 15 mass% or less.

Cho (cobalt) has an effect of reinforcing a solid solution and thereby increasing the strength by solid-dissolving in an austenite phase. However, an excessive amount thereof brings about deterioration in hot workability and weldability. Hence, the content thereof is set to 20 mass% or less.

Al (aluminum) and Ti (titanium) act as deoxidizers in welding, and have an effect of precipitation hardening through formation of the γ'-phase by binding to Ni. Moreover, Ti has effects of lowering the coefficient of thermal expansion, and promoting ageing precipitation hardening of the γ'-phase. However, when the total amount of Al and Ti is excessive, high-temperature ductility deteriorates, so that hot cracks during welding occur more frequently. In addition, when each of Al and Ti is not less than 2 mass%, slag floats on a surface of a molten pool during welding, and is firmly adhered to a surface of the welding metal as a scale coating. This causes lack of fusion and the like, so that deterioration ion welding workability is brought about. Hence, each of Al and Ti is set to 0.01 mass% or more but less than 2.0 mass%, and Al + 1/2Ti is set to 3.0 mass% or less.

Nb (niobium) and Ta (tantalum) have an effect of suppressing ductility dip cracks by forming carbides, and also exert, with the carbides, an effect of increasing the high temperature strength through the formation of the γ'-phase, which us a precipitation strengthening phase, by binding to Ni. However, a too much amount of Nb leads to more frequent occurrences of solidification cracks during welding, and a too much amount of Ta leads to deterioration in ductility. Hence, Nb + 1/2Ta is set to 1.5 mass% or less.

B (boron) has not only effects of increasing the high temperature strength by segregating at grain boundaries, and improving hot workability, but also an effect of suppressing the precipitation of the η-phase in an alloy rich in Ti. However, an excessive amount thereof leads to deterioration in weldability. Hence, the content thereof is set to 0.007 mass% or less.

Zr (zirconium) has an effect of increasing the high temperature strength by segregating at grain boundaries, and has an effect of improving hot workability. However, an excessive amount thereof leads to deterioration of weldability. Hence, the content thereof is set to 0.04 mass% or less.

Si (silicon) acts as a deoxidizer in welding. However, an excessive amount thereof leads to more frequent occurrence of solidification cracks during welding. Hence, the content thereof is set to 0.01 to 0.5 mass%.

Man (manganese) acts as a deoxidizer in welding, and exhibits a desulfurizing effect by which hot cracks are suppressed during welding by fixation of S, which may cause hot cracks during welding. However, an excessive amount thereof leads to a poor fluidity of slag in welding, thereby deteriorating welding workability. Hence, the content thereof is set to 1.0 mass% or less.

P (phosphorus) forms with Ni a eutectic having a low melting point, bringing about more frequent occurrences of solidification cracks during welding. Accordingly, the content thereof is preferably as small as possible. However, excessive reduction thereof affects cost effectiveness. Hence, the content thereof is set to 0.010 mass% or less.

S (sulfur) is an unavoidable impurity which forms with Ni a eutectic having a low melting point, bringing about more frequent occurrences of hot cracks during welding. Accordingly, the content thereof is preferably as small as possible. Hence, the content thereof is set to 0.002 mass% or less.

O (oxygen) enters a filter material from the atmosphere during melting thereof, and gathers at grain boundaries of the welding metal as an oxide, so that the high temperature strength of the grain boundaries is deteriorated, and the susceptibility to hot cracks during welding is increased. Hence, the content thereof is desirably set to 0.005 mass% or less.

Accordingly, the welding material for a Ni-based alloy according to this embodiment has the composition as described above, and hence can be prevented from causing hot cracks during welding, while being excellent in weldability for austenitic Ni-based alloys and the like having a low coefficient of thermal expansion (specific examples are to be described later).

### [SECOND EMBODIMENT]

A welding material for a Ni-based alloy according to a second embodiment has a composition in which C ≤ 0.05 mass%, 8 mass% ≤ Cr ≤ 25 mass%, Fe ≤ 4.0 mass%, W ≤ 15 mass%, 5 mass% ≤ Mo + 1/2(W + Re) ≤ 20 mass%, Co ≤ 20 mass%, 0.01 mass% ≤ Al < 2.0 mass%, 0.01 mass% ≤ Ti < 2.0 mass%, Al + 1/2Ti ≤ 3.0 mass%, 1.5 mass% < Nb ≤ 6.5 mass%, Nb + 1/2Ta ≤ 6.5 mass%, B ≤ 0.007 mass%, Zr ≤ 0.04 mass%, 0.01 mass% ≤ Si ≤ 0.5 mass%, Mn ≤ 1.0 mass%, P ≤ 0.010 mass%, S ≤ 0.002 mass%, O ≤ 0.005 mass%, and the balance are Ni and unavoidable impurities.

In short, the above-described welding material for a Ni-based alloy according to the first embodiment has the composition in which Nb and Ta satisfy "Nb + 1/2Ta ≤ 1.5 mass%," whereas the welding material for a Ni-based alloy according to this embodiment has the composition in which Nb and Ta satisfy both "1.5 mass% < Nb ≤ 6.5 mass%" and "Nb + 1/2Ta ≤ 6.5 mass%." Description on this difference is given below.

As described above, Nb and Ta have an effect of suppressing ductility dip crackling during welding. However, a too much amount of Nb leads to more frequent occurrence of solidification cracks during welding. For this reason, the above-described welding material for a Ni-based alloy according to the first embodiment is made to satisfy "Nb + 1/2Ta ≤ 1.5 mass%" so as to prevent solidification crack from occurring during welding, rather than two greatly suppress ductility dip cracks during welding.

In contrast, the welding material for a Ni-based alloy according to this embodiment is made to contain more than 1.5 mass% of Nb, so as to greatly suppress ductility dip cracks during welding, while solidification cracks during welding is permitted to some degree. In this time, if the total amount of Nb and Ta is too large, the volume ratio of the formed γ'-phase is so large that the hot workability is greatly deteriorated, and the solidification cracks during welding reach an unacceptable range. Hence, "Nb ≤ 6.5 mass%" and "Nb + 1/2Ta ≤ 6.5 mass%" are both satisfied.

Accordingly, as in the case of the above-described first embodiment, the welding material for a Ni-based alloy according to this embodiment can be prevented from causing hot cracks during welding, while being excellent in weldability for austenitic Ni-based alloys and the like having at low coefficient of thermal expansion (a specific example will be described later).

### [THIRD EMBODIMENT]

A welding material for a Ni-based alloy according to a third embodiment is the welding material for a Ni-based alloy according to the second embodiment having a composition further satisfying N ≤ 0.03 mass% and C + N ≤ 0.05 mass%.

N (nitrogen) has an effect of reinforcing a solid solution and increasing tensile strength as in the case of C, and also has an effect of lowering susceptibility to hot cracks during welding in such a way that texture of a welding metal portion is made finer through formation of nitrides. However, an excessive amount thereof brings about occurrence of blowholes, and embitterment due to increase in tensile strength. Hence, the content thereof is set to 0.03 mass% or less, and also the total content of N and C is set to 0.05 mass% or less.

Accordingly, as in the case of the above-described second embodiment, the welding material for a Fly-based alloy according to this embodiment can be prevented from causing hot cracks during welding, while being excellent in weldability for austenitic No-basted alloys and the like having a low coefficient of thermal expansion (a specific example will be described later).

### [FOURTH EMBODIMENT]

A welding material for a Ni-based alloy according to a fourth embodiment is the above-described welding material for a Ni-based alloy according to the second embodiment having a composition further satisfying a rare earth elements ≤ 0.01 mass%.

A rare earth clement (REM) such as La (lanthanum) or Ce (cerium) has a high deoxidizing effect and a high desulfurizing effect, and hence makes it possible to prevent cracks from occurring in thermal processing by grain boundary hardening, and to lower susceptibility to hot crocks during welding. However, an excessive amount thereof leads to more frequent occurrence of solidification cracks during welding because of formation of a eutectic having a low melting point with Ni. Hence, the content thereof is set to 0.01 mass% or less.

Accordingly, the welding material for a Ni-based alloy according to this embodiment can be more securely prevented from causing hot cracks during welding than the welding material of the above-described second embodiment can (a specific example will be described later).

### EXAMPLES

Verification tests conducted for verification of effects of the welding material for a Ni-based alloy according to the present invention are described below. However, the present invention is not limited to the verification tests described below.

### [VERIFICATION TESTS]

Test samples 1 to 4 of welding materials for a Ni-based alloy having their respective compositions (each value is expressed in mass%) shown in the following Tables 1 and 2 were formed, and measured for brittleness temperature range (BTR) by the Trans-Varestraint testing method. Moreover, for comparison, a typical welding material for a Ni-based alloy (AWS standard A5.14 "ERNiCrMo-3"/a comparative sample) was also measured for brittleness temperature range (BTR) by the Trans-Varestraint testing method. The following Table 3 shows the results.

**[Table 1]**

| | C | Cr | Fe | W | Mo | Re | Co | Al | Ti | Nb | Ta | B | Zr |
|---|---|---|---|---|---|---|---|---|---|---|---|---|---|
| 1 | 0.031 | 11.9 | 0.49 | 2.9 | 8.1 | 0.03 | 0.12 | 1.62 | 0.65 | 0 | 0 | 0.003 | 0.015 |
| 2 | 0.030 | 12.0 | 0.50 | 0 | 9.7 | 0 | 0 | 1.65 | 0.66 | 2.5 | 0 | 0.003 | 0.017 |
| 3 | 0.028 | 11.9 | 0.47 | 6.9 | 6.0 | 0.01 | 0.09 | 1.64 | 0.70 | 2.5 | 0 | 0.003 | 0.031 |
| 4 | 0.030 | 12.0 | 0.50 | 0 | 9.7 | 0 | 0 | 0.60 | 1.00 | 2.5 | 0 | 0.003 | 0.017 |
| Comparative | 0.010 | 20.5 | 0 | 0 | 8.1 | - | - | 0.16 | 0.27 | 3.6 | 0 | - | - |

**[Table 2]**

| | Si | Mn | P | S | O | N | REM | Ni |
|---|---|---|---|---|---|---|---|---|
| 1 | 0.04 | 0.05 | 0.003 | 0.0004 | 0.0003 | 0.0007 | - | Bal. |
| 2 | 0.04 | 0.05 | 0.003 | 0.0005 | 0.0010 | 0.0010 | - | Bal. |
| 3 | 0.05 | 0.05 | 0.002 | 0.0006 | 0.0006 | 0.0017 | - | Bal. |
| 4 | 0.04 | 0.05 | 0.003 | 0.0005 | 0.0010 | 0.0010 | 0.005 | Bal. |
| Comparative | 0.06 | 0.06 | 0.005 | 0.0010 | - | - | - | Bal. |

**[Table 3]**

| | BTR (°C) |
|---|---|
| Test Sample 1 | 116 |
| Test Sample 2 | 137 |
| Test Sample 3 | 145 |
| Test Sample 4 | 138 |
| Comparative Simple | 211 |

As can be seen from the above-described Table 3, each of the test samples 1 to 4, which corresponded to the welding material for a Ni-based alloy according to the present invention, had A BTR lower than that of the comparative sample, which corresponded to the conventional welding material for a Ni-based alloy. This verifies that the welding material for a Ni-based alloy according to the present invention can be prevented from causing hot cracks during welding, while being excellent in weldability for austenitic Ni-based alloys and the like having a low coefficient of thermal expansion.

### INDUSTRIAL APPLICABILITY

The welding material for a Ni-based alloy according to the present invention can be prevented from causing hot cracks during welding, while being excellent in weldability for austenitic Ni-based alloys and the like having a low coefficient of thermal expansion. This, for example, makes it possible to produce, a rotor for a steam turbine by use of an austenitic Ni-based alloy or the like having a low coefficient of thermal expansion, the steam turbine employing an elevated temperature of steam (650°C or higher) in order to improve the thermal efficiency thereof. Therefore, the welding material for a Ni-based alloy according to the present invention can be used extremely beneficially from the industrial viewpoint.

### REFERENCE SIGNS LIST

- 110: rotor
- 111A, 111B: main body part
- 112: shaft end part
- 120: rotor
- 121A, 121B: main body parts
- 122: shaft end part
- 123: intermediate part

## Claims

1. A welding material for a Ni-based alloy, **characterized by** comprising components expressed as follows:
C ≤ 0.05 mass%;
8 mass% ≤ Cr ≤ 25 mass%;
Fe ≤ 4.0 mass%;
W ≤ 15 mass%;
5 mass% ≤ Mo + 1/2(W + Re) ≤ 20 mass%;
Co ≤ 20 mass%;
0.01 mass% ≤ Al < 2.0 mass%;
0.01 mass% ≤ Ti < 2.0 mass%;
Al + 1/2Ti ≤ 3.0 mass%;
Nb + 1/2Ta ≤ 1.5 mass%;
B ≤ 0.007 mass%;
Zr ≤ 0.04 mass%;
0.01 mass% ≤ Si ≤ 0.5 mass%;
Mn ≤ 1.0 mass%;
P ≤ 0.010 mass%;
S ≤ 0.002 mass%;
O ≤ 0.005 mass%; and
Ni and unavoidable impurities which constitute the balance.

2. A welding material for a Ni-based alloy **characterized by** comprising components expressed as follows:
C ≤ 0.05 mass%;
8 mass% ≤ Cr ≤ 25 mass%;
Fe ≤ 4.0 mass%;
W ≤ 15 mass%;
5 mass% ≤ Mo + 1/2(W + Re) ≤ 20 mass%;
Co ≤ 20 mass%;
0.01 mass% ≤ Al < 2.0 mass%;
0.01 mass% ≤ Ti < 2.0 mass%;
Al + 1/2Ti ≤ 3.0 mass%;
1.5 mass% < Nb ≤ 6.5 mass%;
Nb + 1/2Ta ≤ 6.5 mass%;
B ≤ 0.007 mass%;
Zr ≤ 0.04 mass%;
0.01 mass% ≤ Si ≤ 0.5 mass%;
Mn ≤ 1.0 mass%;
P ≤ 0.010 mass%;
S ≤ 0.002 mass%;
O ≤ 0.005 mass%; and
Ni and unavoidable impurities which constitute the balance.

3. The welding material for a Ni-based alloy according to claim 2, **characterized by** further comprising N ≤ 0.03 mass%, the welding material **characterized in that**
C + N ≤ 0.05 mass%.

4. The welding material for a Ni-based alloy according to claim 2, **characterized by** further comprising a rare earth element ≤ 0.01 mass%.
